# EUROPEAN PATENT SPECIFICATION

(11) **EP 0 478 377 B1**
(45) Date of publication and mention of the grant of the patent: **26.02.1997**
(21) Application number: 91308875.3
(22) Date of filing: 27.09.1991
(51) Int. Cl.: H04N 5/208

(54) **Horizontal edge compensation circuits**
Schaltungen zur Kompensation des horizontalen Randes
Circuits de compensation de bord horizontal

(30) Priority: 28.09.1990 KR 1577190
(43) Date of publication of application: 01.04.1992
(73) Proprietor: SAMSUNG ELECTRONICS CO., LTD., Suwon-City, Kyounggi-Do 441-370 (KR)
(72) Inventor: Min, Byeong-min, Dobong-ku, Seoul (KR)
(74) Representative: Stanley, David William

(56) References cited:
- GB-A- 2 213 022
- US-A- 4 030 121
- US-A- 4 263 616
- PATENT ABSTRACTS OF JAPAN vol. 13, no. 571 (E-862)(3919) 18 December 1989 & JP-A-1 238 281

## Description

The present invention relates to video signal processing circuits for use in video apparatus such as TV, VTR, video camera, etc., and particularly to horizontal edge compensation circuits.

Various examples of prior art circuits will now be described with reference to Figures 1 to 10 of the accompanying diagrammatic drawings, in which:
Figure 1 is a frequency spectral view of a composite video signal in a standard NTSC colour television;
Figure 2 is a block diagram of a conventional horizontal edge compensation circuit;
Figure 3 is a graph showing the frequency response of the band-pass filter in the horizontal edge compensation circuit of Figure 2;
Figures 4A to 4D are waveforms of respective components showing the operation of the horizontal edge compensation circuit of Figure 2;
Figure 5 is a waveform showing a state of controlling gain in Figure 2;
Figure 6 is a block diagram showing another embodiment of a conventional horizontal edge compensation circuit;
Figure 7 is a graph showing the frequency responses of respective band-pass filters in the horizontal edge compensation circuit of Figure 6;
Figure 8 is a graph showing the output of the mixer with respect to each frequency path of the horizontal edge compensation circuit in Figure 6;
Figure 9 is a block diagram of still another embodiment of a conventional horizontal edge compensation circuit; and
Figures 10A to 10E are waveforms showing the operation of the horizontal edge compensation circuit of Figure 9.

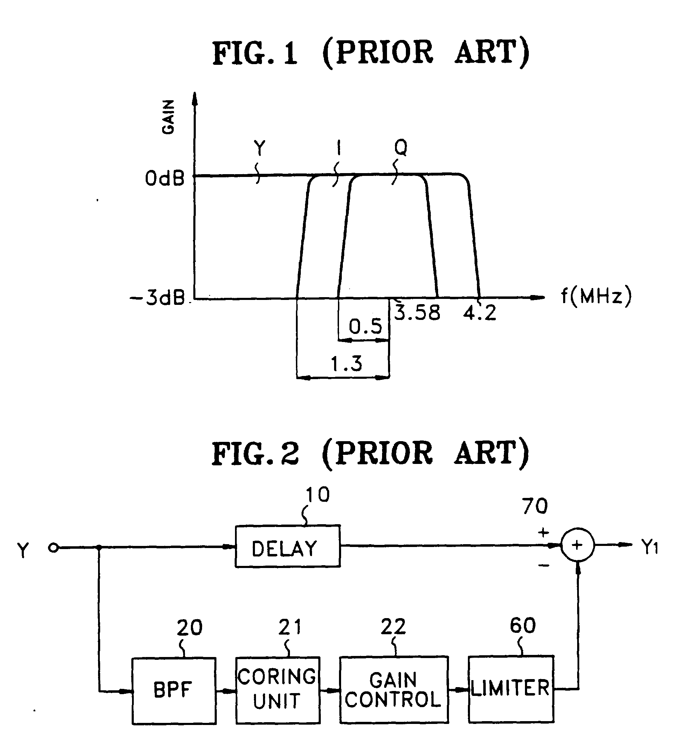

Generally, when the number of lines per frame and the number of frames per second have been fixed, horizontal resolution is largely a function of system bandwidth during reproduction of a recorded video signal. The frequency spectrum of a standard composite video signal for use in an NTSC colour television is as shown in Figure 1, where the bandwidth of the luminance signal Y is 4.2 MHz, and in the colour difference signal channels, a 1.3 MHz bandwidth for the I channel and a 500 kHz bandwidth for the Q channels are arranged centering around a colour subcarrier frequency fsc which is 3.58MHz. More particularly, the recent introduction of NTSC helical scan video recorders has resulted in the appearance of low luminance bandwidth (2 MHz) and chroma bandwidth (350 kHz) pictures, due to their high portability and low cost. These low bandwidth composite video signals make it difficult to obtain a high-resolution picture. If the luminance and chrominance signal bandwidths were wider, a sharper picture would be possible. However, in this case, the transmitting and receiving systems should be modified, resulting in an increase of the production costs of the transmitter and receiver. And so, studies on horizontal edge compensation have been continued in order to enhance the sharpness of pictures without any change to the bandwidths of the standard luminance and chrominance signals. Examples of prior art relevant to the technological field of the present invention are described in U.S. Patent US-A-4,030,121 to Faroudja, U.S. Patent US-A-4,414,564 to Hitchcock, U.S. Patent US-A-4,263,616 to Lee and U.S. Patent US-A-4,853,783 to Ozaki.

US Patent US-A-4,030,121 to Faroudja discloses a horizontal edge compensation circuit comprising means for differentiating a luminance signal twice to provide first and second differentials thereof, means for delaying the input signal, means for reshaping said first differential signal, and means for adding to the delayed luminance signal a proportion of said first differential signal, which proportion is a function of said second differential signal.

Figure 2 shows a conventional horizontal edge compensation circuit. The circuit of Figure 2 comprises a first path including delay circuit 10 for delaying an input luminance signal for a certain period, a second path including band-pass filter 20 which is tuned to a frequency to compensate the horizontal edge, and an adder 70 for summing signals supplied from the first and second paths. The second path includes band-pass filter 20, coring unit 21, gain control unit 22, and limiter 60.

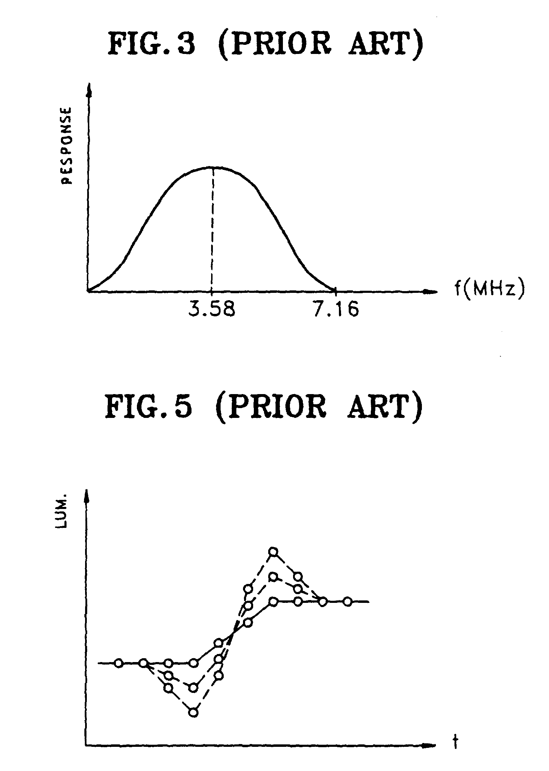

Figure 3 illustrates the frequency response of the band-pass filter 20 which is tuned to 3.58 MHz.

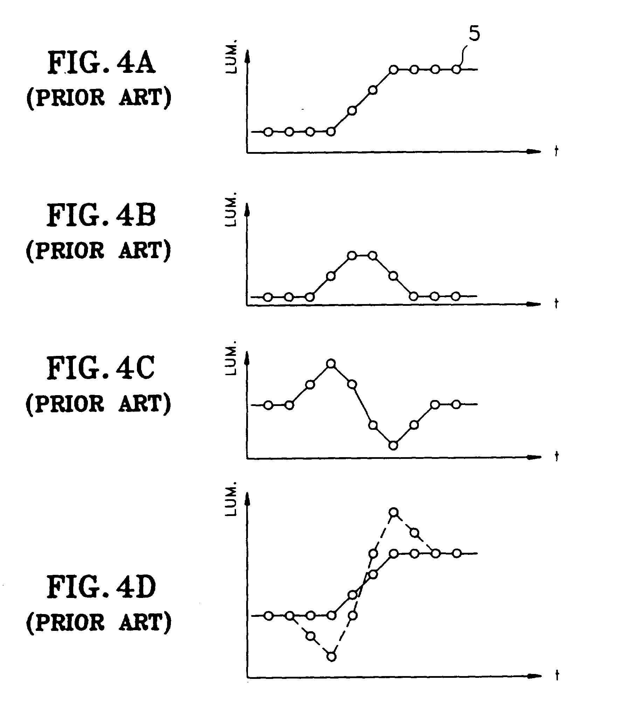

Figures 4A through 4D illustrate waveforms showing operational characteristics of the respective components of the horizontal edge compensation circuit of Figure 2 including the above-mentioned band-pass filter 20. The small circles 5 represent sampling points with the frequency of the sampling clock at 4fsc (4 x 3.58 = 14.3 MHz).

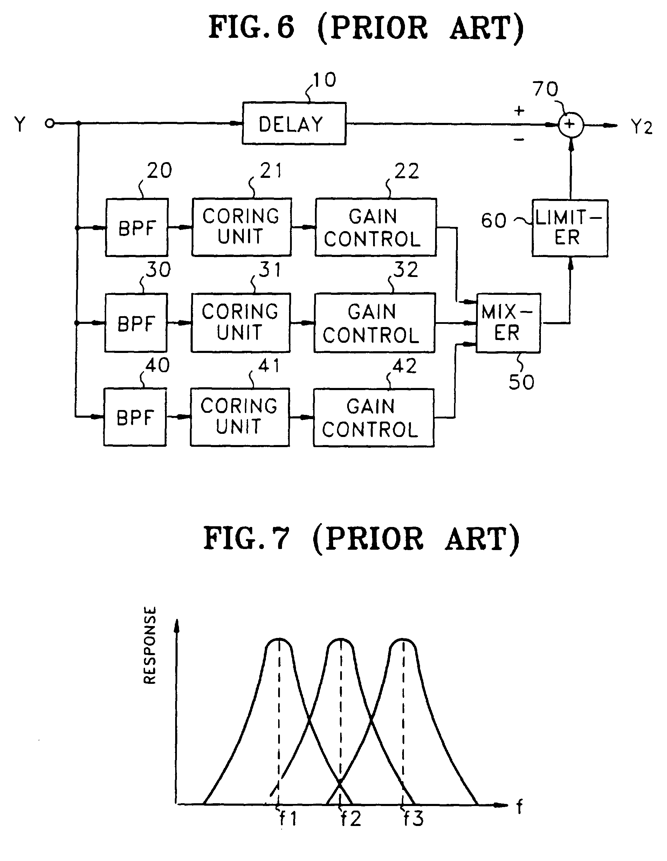

If luminance signal Y as shown in Figure 4A is fed to the horizontal edge compensation circuit of Figure 2, the band-pass filter 20 differentiates the luminance signal Y as shown in Figure 4B, and then outputs a frequency component tuned to 3.58 MHz. The band-pass filter 20 differentiates the above differentiated signal again, and then outputs the signal as shown in Figure 4C. The coring unit 21 removes the noises having small amplitude impulse components or noise spikes from the edge-compensating component output from the band-width filter 20. The gain control unit 22 controls the gain of the noise-removed horizontal edge compensating component. The gain control unit 22 controls the size of the horizontal edge compensating signal in order to compensate the horizontal edge of a primary signal as shown in Figure 5. The limiter 60 limits the horizontal edge compensating signal generated from the gain control unit 22 in order to become not more than a certain size, and supplies the signal to the adder 70. The adder 70 adds the luminance signal supplied via the first path including the delay circuit 10 to the horizontal edge compensation signal supplied via the second path, and outputs luminance signal Y₁ in which the horizontal edges are compensated as shown in Figure 4D. At this time, the horizontal edge compensating signal of Figure 4C is actually subtracted from the primary signal.

The signal whose horizontal edge is compensated as in Figure 5 enhances the sharpness of the displayed video signal by further increasing the level difference in the transition interval of the video signal. The effects of the conventional horizontal edge compensation circuit, however, are extremely limited because the circuit compensates the edge of a signal extracted frequency component of limited bandwidth.

Figure 6 illustrates another embodiment of the conventional horizontal edge compensation circuit.

The horizontal edge compensation circuit in Figure 6, which is an improvement over the circuit in Figure 2, comprises delay circuit 10 for delaying the input luminance signal Y for a certain period, band-pass filters 20, 30 and 40 which are each supplied with luminance signal Y, coring units 21, 31 and 41 which are each coupled to the output of a respective band-pass filter, gain control units 22, 32 and 42 which are each coupled to the output of a respective coring unit, mixer 50 for mixing the output signal from each gain control unit, and limiter 60 which limits the magnitude of the output signal from mixer 50, and adder 70 which adds the luminance signal supplied from the delay circuit 10 to the horizontal edge compensation signal supplied from the limiter 60 and outputs the luminance signal Y₂ whose horizontal edge is compensated.

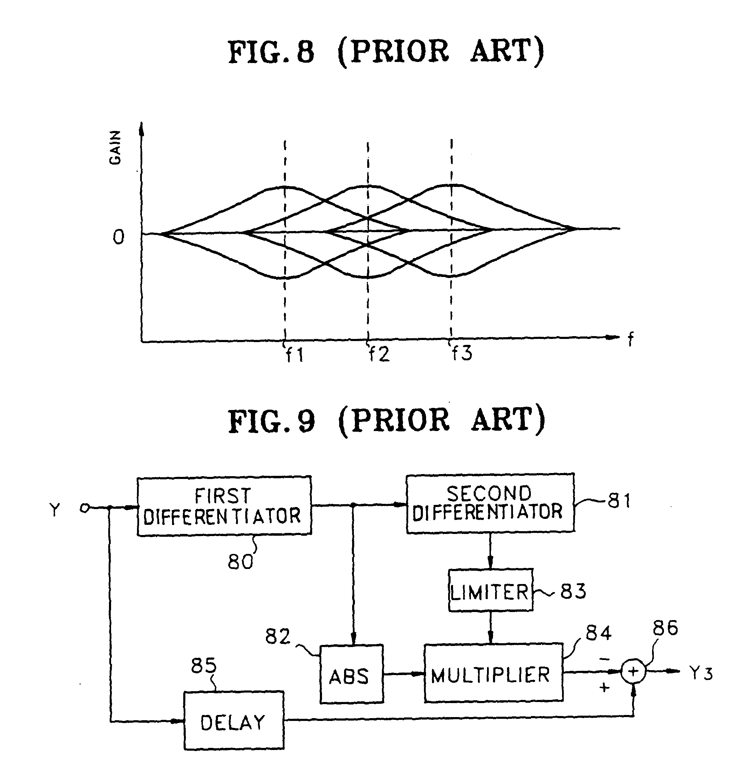

The basic operation of the horizontal edge compensation circuit in Figure 6 is the same as that of the circuit in Figure 2. However, the horizontal edge compensation circuit of Figure 6 obtains a horizontal edge compensation signal over a wider frequency bandwidth than that of the circuit of Figure 2. For instance, the band-pass filters 20, 30 and 40 extract components tuned to the frequencies of f1 = 2.3 MHz, f2 = 3.58 MHz and f3 = 4.58 MHz respectively, as shown in Figure 7. Then, the mixer 50 does not emphasize the particular horizontal edge compensation component by simply adding the respective horizontal edge compensation components extracted at the different frequency bandwidths to each other according to the characteristics of the band-pass filters 20, 30 and 40, but it emphasizes or suppresses the particular edge compensation component by adding or subtracting the three horizontal edge compensation components to or from one another. The characteristic of the mixer 50 for mixing the three different horizontal edge compensation components appropriately in order to emphasize a particular component is shown in Figure 8.

Figure 8, in which the ordinate axis represents gains and the abscissa axis represents frequencies, illustrates the horizontal edge compensation signals having three different frequencies f1, f2 and f3. Such different horizontal edge compensation signals are added or subtracted to or from one another to obtain various horizontal compensation signals.

The horizontal edge compensation signal is added to the primary signal which passed through the delay circuit 10 of Figure 6, thereby obtaining a sharper horizontal edge-compensated luminance signal Y₂.

However, since the aforementioned two conventional horizontal edge compensation circuits extract horizontal edge compensation components from particular frequencies to add the components, the circuits have disadvantages in that, when the level of video signal is changed, a trailing phenomenon occurs in which the falling length tails away because an overshot frequency component is converted to higher harmonics of the particular frequencies and the transition time of a video signal cannot be contracted.

In order to solve these problems, still another conventional horizontal edge compensation circuit is as shown in Figure 9.

The horizontal edge compensation circuit in Figure 9 comprises delay circuit 85 for delaying an input luminance signal Y for a certain period, a first differentiator 80 for differentiating the luminance signal Y, a second differentiator 81 for again differentiating the output of the first differentiator, limiter 83 for limiting the size of the second differentiated signal, an absolute value (ABS) circuit 82 for obtaining the absolute value of the first differentiated signal, a multiplier 84 for multiplying the absolute value of the first differentiated signal by the limited second differentiated signal, and an adder 86 for summing the outputs of multiplier 84 and delay circuit 85, to output a horizontal edge-compensated luminance signal Y₃.

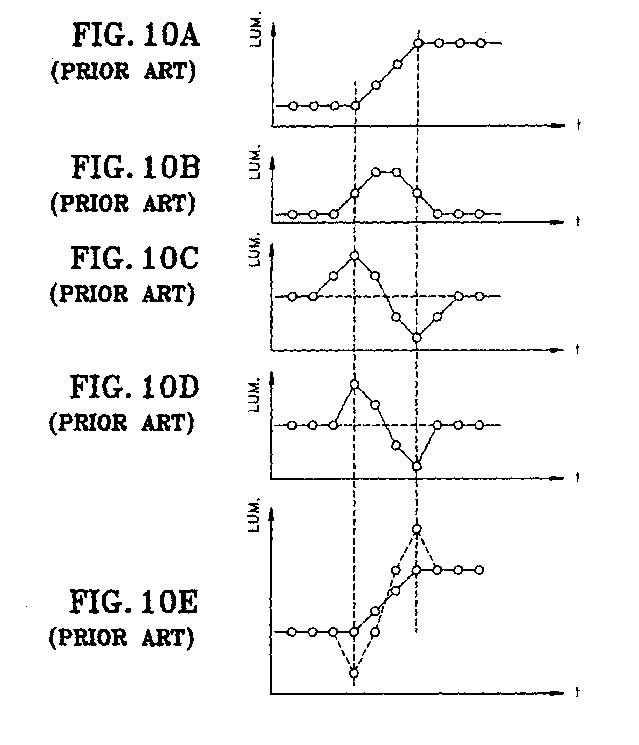

If luminance signal Y as shown in Figure 10A is input to the horizontal edge compensation circuit of Figure 9, the luminance signal Y is differentiated in the first differentiator 80 and the first differentiated signal is as shown in Figure 10B. The first differentiated signal is supplied to the second differentiator 81 and simultaneously is passed through the absolute value circuit 82 coupled in parallel to the second differentiator 81. The signal as shown in Figure 10C which is obtained by differentiating again the first differentiated signal in the second differentiator 81 and then passing it through the limiter 83, is supplied to the multiplier 84. The multiplier 84 multiplies the absolute value of the first differentiated signal supplied through the absolute value circuit 82 by the signal output from the limiter 83, resulting in obtaining the horizontal edge compensation signal as shown in Figure 10D.

The horizontal edge compensation signal obtained by multiplying the first differentiated signal by the second differentiated signal has harmonics higher than 3.58 MHz. In the adder, the horizontal edge compensation signal is added to the primary signal which has been delayed for a certain time in the delay circuit 85, to become a horizontal edge-compensated luminance signal Y₃ as shown in Figure 10E. At this time, the horizontal edge compensation signal of Figure 10D is actually subtracted from the primary signal.

As described above, the conventional horizontal edge compensation circuit shown in Figure 9 improves the sharpness of a picture by reducing the trailing of the horizontal edge compensation signal and also the transition time of the level of a video signal. But, since the horizontal edge compensation circuit in Figure 9 adds second higher harmonics to the horizontal edge compensation component, the circuit has an unnecessarily long trailing and roll-off so that the picture becomes dim even if the transition time of the level of the video signal is short.

Preferred embodiments of the present invention aim to provide a horizontal edge compensation circuit which improves the resolution of a picture while maintaining standard frequency bandwidths in a video processing system.

A further aim of preferred embodiments of the present invention is to provide a horizontal edge compensation circuit which shortens the transition time of the level of a video signal and controls the degree of roll-off by preventing a second higher harmonic component from being included in the horizontal edge compensation signal when compensating the horizontal edge of the picture.

According to a first aspect of the present invention, there is provided a horizontal edge compensation circuit comprising:
a horizontal edge compensation circuit comprising means for delaying an input luminance signal, waveform converter means comprising a first differentiator for differentiating said input luminance signal to output a first differentiated signal, absolute value means for taking the absolute value of the first differentiated signal and waveform reshaping means for reshaping the signal output from the absolute value means to produce a converted signal; and means for adding to the delayed luminance signal a proportion of said first differentiated signal, which proportion is a function of a second differentiated signal, characterised in that the circuit further comprises quantization means comprising a second differentiator circuit for differentiating again the first differentiated signal to produce the second differentiated signal, means for comparing the second differentiated signal with a predetermined reference level, amplifying the second differentiated signal only if it has a low level difference and not amplifying it if it has a high level difference, and then, generating a code signal to quantize the second differentiated signal, the reshaping means comprising means for generating first, second and third data signals from the absolute value of said first differentiated signal and from delayed versions thereof thereby to detect the falling edge or the rising edge of the absolute value signal of said first differentiated signal and to select sampling data comprising one of said first, second or third data signals according to whether the edge is rising or falling, to output said converted signal to a gain control means for selectively multiplying said converted signal according to said code signal, and thereby controlling the degree of a horizontal edge compensation signal output from the gain control means, and said adder adds the input luminance signal delayed for a certain time in said delay means to said horizontal edge compensation signal.

Preferably, said quantization means comprises:
a low level transition booster for amplifying and outputting the second differentiated signal supplied from said second differentiation circuit at a predetermined amplification rate if the second differentiated signal is lower than a second reference signal;
a reference signal generator for receiving a first reference signal and generating therefrom a plurality of reference signals having a certain step therebetween; and
a code generator for comparing the output signal of said low level transition booster with the reference signals output from said reference signal generator to generate a certain-bit code signal.

Preferably, said gain control means comprises:
a multiplication selector for multiplying the signal output from said waveform reshaper by a multiplication value selected according to said code signal and outputting the obtained signal; and
a multiplier for receiving a gain control signal and controlling the gain of the output signal of said multiplication selector.

Preferably, said waveform reshaper comprises:
first and second delay circuits for delaying for a certain time and outputting a signal whose absolute value is taken in said absolute value circuit after differentiating the input luminance signal;
comparing means for comparing to one another the output signals of said first and second delay circuits and said absolute value circuit;
logic means for outputting a selection signal, being coupled to the output terminal of said comparing means; and
a multiplexer for selecting and outputting a signal among the signals output from said first and second delay circuits and absolute value circuit according to the selection signal supplied from said logic means.

Said waveform converter means may alternatively comprise:
first to fourth delay circuits for sequentially delaying the input luminance signal for a certain time;
operation means having first to third adders and first to third absolute value circuits to generate first to third data signals, by calculating said input luminance signal and the signals output from said first to fourth delay circuits, then taking absolute values of the calculated results;
comparing means having first and third comparators for receiving said second and third data signals and comparing their respective sizes, and second and fourth comparators for receiving said first and second data signals and comparing their respective sizes;
logic means having a first AND gate for receiving the output signals from said first and second comparators and outputting a selection signal, and a second AND gate for receiving the output signals from said third and fourth comparators and outputting another selection signal; and
a multiplexer for selecting and outputting a signal among the signals output from said first through third absolute value circuits according to the selection signals from said logic means.

Preferably, said low level transition booster comprises:
an absolute value circuit for taking an absolute value of the second differentiated signal supplied from said second differentiator;
a comparator for comparing the absolute value signal of the second differentiated signal from the absolute value circuit with a predetermined reference signal;
an amplifier for amplifying said second differentiated signal; and
a switch device for selecting and outputting the output signal of said amplifier or the second differentiated signal without amplification, according to the output signal of said comparator.

Preferably, said code generator outputs M-bit codes satisfying M ≥ 3.3 log (2N+1) by comparing the signal supplied from said low level transition booster with 2N reference signals supplied from said reference signal generator, where M is defined as the bit number of the code generated from said code generator and N is an integer.

Preferably, said multiplication selector converts a signal supplied from said waveform converter means into a signal of A x 1/N x m according to the code signal supplied from said code generator and outputs the result, where A is defined as the size of the output signal of said waveform converter means and multiplied as 1/N x m (m is an integer and satisfies N ≥ m ≥ -N).

The invention also extends to video apparatus provided with a horizontal edge compensation circuit according to the preceding aspect of the invention.

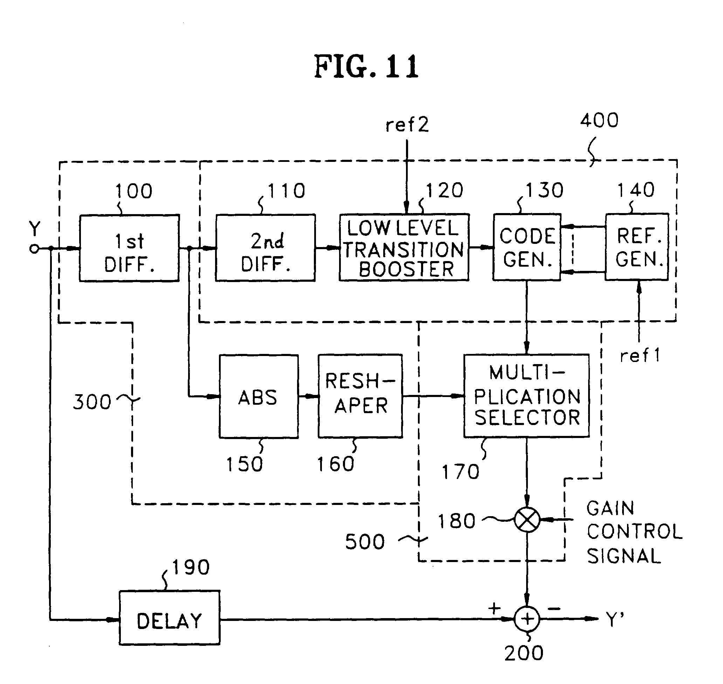

For a better understanding of the invention, and to show how the same may be carried into effect, reference will now be made, by way of example, to Figures 11 to 22 of the accompanying diagrammatic drawings, in which:
Figure 11 is a block diagram of one example of an embodiment of a horizontal edge compensation circuit according to the present invention;

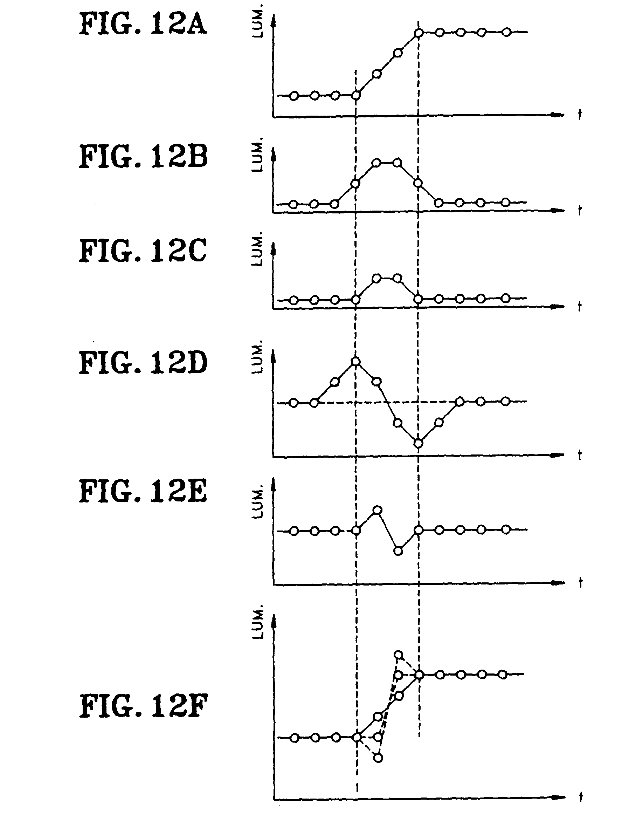

Figures 12A to 12F are waveforms of respective components showing the operation of the horizontal edge compensation circuit of Figure 11;

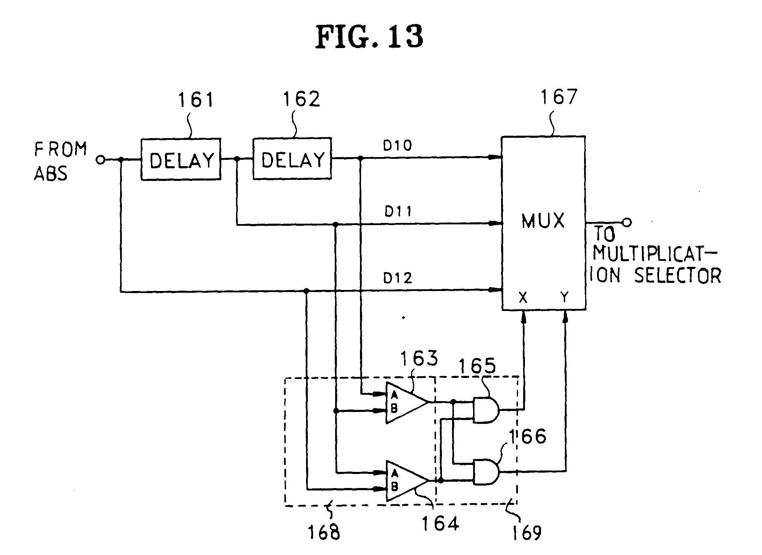

Figure 13 is a block diagram showing one example of an embodiment of a waveform reshaper of the horizontal edge compensation circuit of Figure 11;

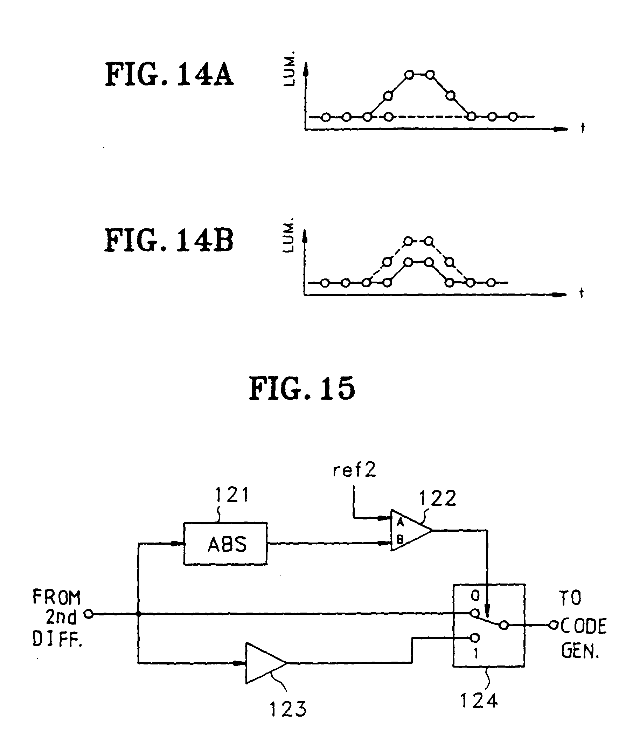

Figures 14A and 14B are waveforms showing the operation of the waveform reshaper of Figure 13;
Figure 15 is a block diagram showing one example of an embodiment of a low level transition booster of the horizontal edge compensation circuit of Figure 11;

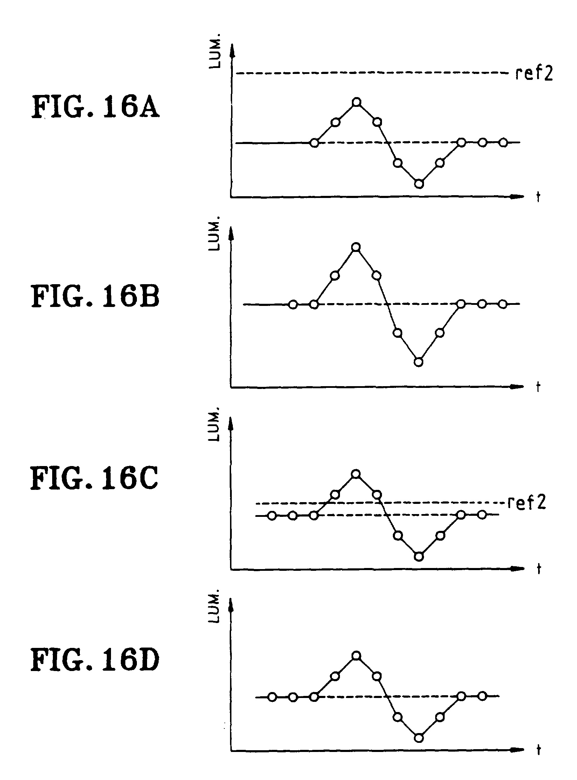

Figures 16A to 16D are waveforms of input and output signals obtained during operation of the low level transition booster of Figure 15;

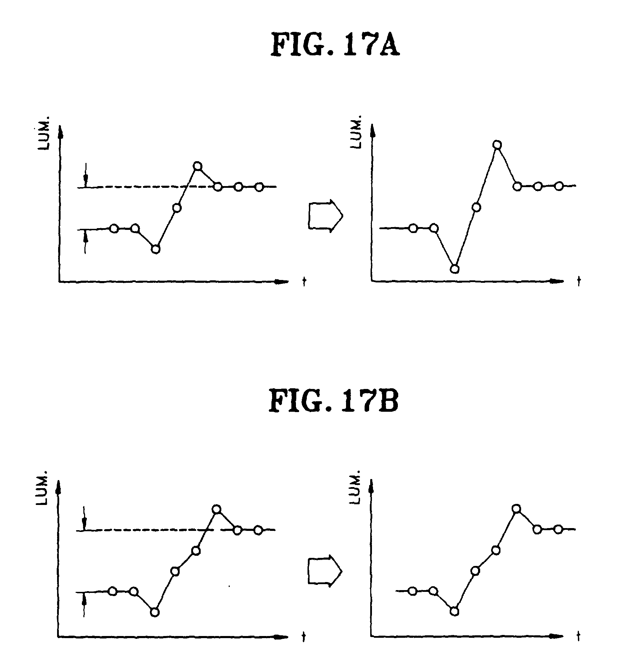

Figures 17A and 17B are waveforms illustrating the function of the low level transition booster of Figure 15;

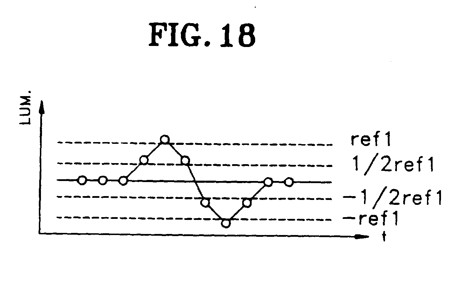

Figure 18 is waveform showing the operation of a reference signal generator of the horizontal edge compensation circuit of Figure 11;

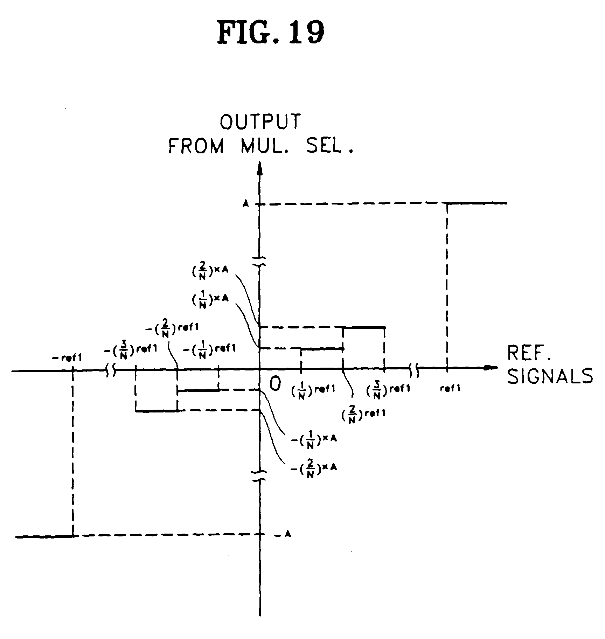

Figure 19 is a graph showing an input and output characteristic of a multiplication selector of the horizontal edge compensation circuit of Figure 11;

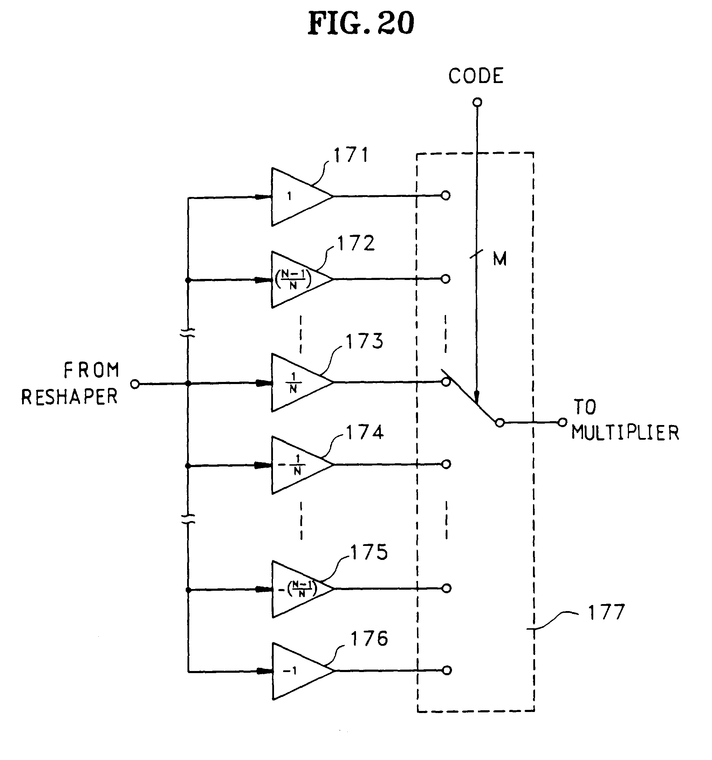

Figure 20 is a block diagram showing one embodiment of a multiplication selector of the horizontal edge compensation circuit of Figure 11;

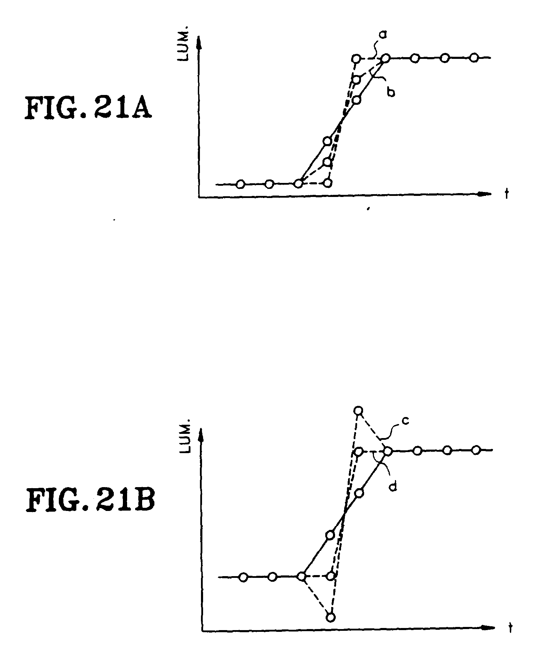

Figures 21A and 21B are waveforms showing one example of a signal whose horizontal edge is compensated by the horizontal edge compensation circuit of Figure 11;

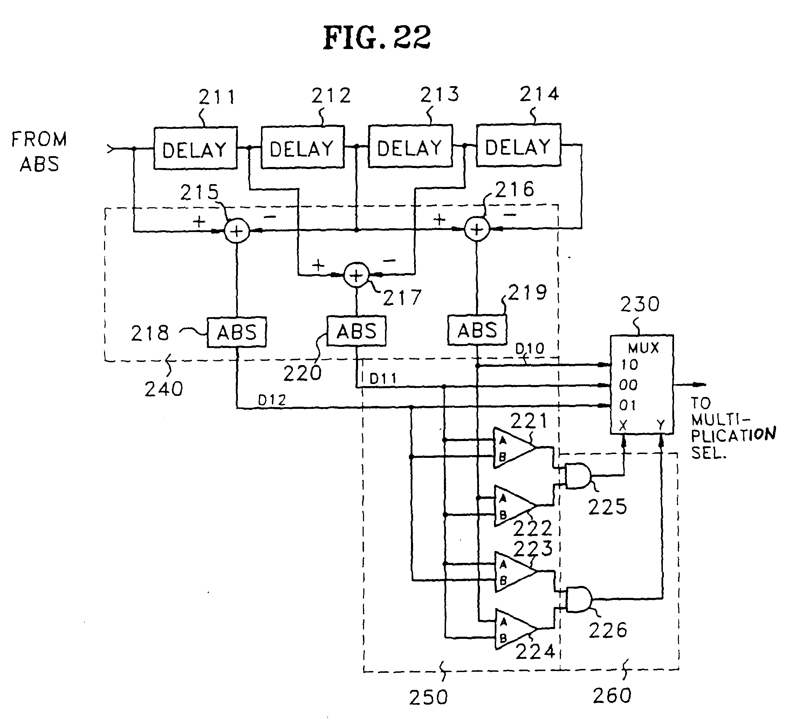

Figure 22 is a block diagram showing another example of an embodiment of the waveform reshaper of the horizontal edge compensation circuit of Figure 11.

Figure 11 illustrates a preferred embodiment of a horizontal edge compensation circuit of the present invention. The circuit comprises a first path for delaying an input luminance signal Y for a certain time, a second path for generating and supplying a horizontal edge compensation signal of which the magnitude is controlled adaptively to a level change of the input luminance signal, and an adder 200 for adding the luminance signal supplied from the first path to the horizontal edge compensation signal supplied from the second path. A waveform converter means 300 for reshaping a waveform on the second path comprises a first differentiator 100 for differentiating the input luminance signal Y, an absolute value circuit 150 for taking the absolute value of the output signal of the first differentiator 100, and a waveform reshaper 160 for reshaping the waveform of the absolute value signal of the first differentiated signal during a certain period, being coupled to the output terminal of the absolute value circuit 150. A quantization means 400 on the second path comprises a second differentiator 110 for differentiating again the first differentiated signal of the input luminance signal Y, a low level transition booster 120 for amplifying and outputting the second differentiated signal supplied from the second differentiator 110 at a predetermined amplification rate if the second differentiated signal is lower than a predetermined second reference signal ref2, or bypassing the second differentiated signal if the former is higher than the latter, and a code generator 130 which is coupled to the output terminals of both the low level transition booster 120 and a reference signal generator 140 for outputting a plurality of reference signals by receiving a first reference signal ref1, for comparing the output signal of the low level transition booster 120 with the reference signals output from the reference signal generator 140 to generate a specific bit code.

A gain control means 500 on the second path comprises a multiplication selector 170 which is coupled to both the code generator 130 of the quantization means 400 and the waveform reshaper 160 of the waveform conversion means 300, respectively, for selecting a multiplication value according to the code supplied from the code generator 130, and multiplying the signal output from the waveform reshaper 160 by the multiplication value to output the result, and an adder 180 for receiving the output signals of the multiplication selector 170 and a gain control signal so as to apply a certain gain to the output signal of the multiplication selector 170.

The preferred waveform reshaper 160 of the horizontal edge compensation circuit of Figure 11 is shown in Figure 13. The waveform reshaper 160 comprises first and second delay circuits 161 and 162 for delaying for a certain time and outputting the output signal of the absolute value circuit 150, comparing means 168 having a first comparator 163 which is coupled to the output terminals of the first and second delay circuits 161 and 162, for comparing the output signal D11 of the first delay circuit 161 with the output signal D10 of the second delay circuit 162, a second comparator 164 which is coupled to the output terminals of absolute value circuit 150 and the first delay circuit 161, for comparing the output signal D12 of the absolute value circuit 150 with the output signal D11 of the first delay circuit 161, logic means 169 having first and second AND gates 165 and 166 which are coupled to the output terminals of the first and second comparators 163 and 164, for outputting a selection signal, and a multiplexer 167 for selecting and outputting a data signal among the data signals D10, D11 and D12 according to the selection signal supplied from the first and second AND gates 165 and 166.

Another embodiment of the waveform converter means is illustrated in Figure 22. The waveform reshaper 160 of Figure 22 comprises delay circuits 211, 212, 213 and 214 for supplying the data signals D10, D11 and D12 which are compared to each other, operation means 240 having adders 215, 216 and 217 and absolute value circuits 218, 219 and 220 for calculating the luminance signal fed to the waveform reshaper 160 and the luminance signals output from the delay circuit 211, 212, 213 and 214, then taking their absolute values to generate the data signals D10, D11 and D12, comparing means 250 having comparators 221, 223 for receiving the different data signals D11 and D12 among the data signals to compare their sizes and comparators 222 and 224 for receiving the different data signals D10 and D11 among the data signals to compare their sizes, logic means 260 having AND gate 225 for receiving the output signals of the comparators 221, 222, to output a selection signal and AND gate 226 for receiving the output signals of the comparators 223 and 224 to output another selection signal, and a multiplexer 230 for selecting and outputting a data signal among the data signals D10, D11 and D12 according to the selection signal. That is, the waveform reshapers of Figure 13 and Figure 22 compare the data signals D10, D11 and D12 obtained from the first differentiated signal, detect the falling edge or the rising edge of the input luminance signal Y, and select necessary sampling data according to the respective edges.

The detailed circuit of one example of the low level transition booster 120 of Figure 11 is illustrated in Figure 15. The low level transition booster 120 comprises an absolute value circuit 121 for taking the absolute value of the second differentiated signal output from the second differentiator 110, a comparator 122 for comparing the output signal of the absolute value circuit 121 to a predetermined second reference signal ref2 to output a logic signal, and a switch device 124 for selecting and outputting the second differentiated signal supplied from the second differentiator 110 or a second differentiated signal amplified by an amplifier 123 according to the logic signal.

The detailed circuit of one example of the multiplication selector 170 of Figure 11 is illustrated in Figure 20. The multiplication selector 170 comprises a plurality of amplifiers for amplifying the output signals of the waveform reshaper 160 by a certain amplification rate, and a switch device 177 for selecting and outputting one of the respective output signals from the amplifiers according to a code supplied from the code generator 130.

If luminance signal Y as shown in Figure 12A is input to the horizontal edge compensation circuit of Figure 11, the luminance signal Y is differentiated in the first differentiator 100 and then its absolute value is taken to give the resultant signal as shown in Figure 12B. The absolute value signal of the first differentiated signal is supplied to the waveform reshaper 160 to reshape the waveform as shown in Figure 12C. As shown in Figure 13, the waveform reshaper 160 generates data signals D10 and D11 to be compared when the absolute value signal D12 of the first differentiated signal passes through the first and second delay circuits 161 and 162. The data signals D10, D11 and the absolute value signal D12 are compared to one another in the first and second comparators 163 and 164 so as to output logic signals. The logic signals are logically summed in the first and second AND gates 165 and 166 to output a selection signal. The multiplexer 167 selects and outputs one of the data signals D10, D11 and D12 according to the selection signal. The data signals D10, D11 and D12 have the following two possible conditions:$\text{D10 ≤ D11 ≤ D12}$$\text{D10 ≥ D11 ≥ D12}$

In the multiplexer 167, if a rising edge of the first differentiated signal is detected as represented in the first expression (1), the multiplexer 167 is switched from the sampling data of D11 to the sampling data of D10, and if a falling edge of the first differentiated signal is detected as represented in the second expression (2), the multiplexer 167 is switched from the sampling data of D11 to the sampling data of D12.

That is, the data signals D10 and D11 and the absolute value signal D12 supplied from the first and second delay circuits 161 and 162 are compared to one another in the first and second comparators 163 and 164 to obtain logic signals, then the logic signals are logically summed in the first and second AND gates 165 and 166 to obtain a selection signal, and then, the selection signal controls the multiplexer 167 to reshape the waveform. As the absolute value signal of the first differentiated signal as shown in Figure 14A is input, a signal having a reshaped waveform as shown in Figure 14B is output.

The horizontal edge compensation signal is processed only in a predetermined interval as shown in Figure 12A through 12F by reshaping the waveform as described above, thereby preventing the lengthening of the horizontal edge compensation signal as harmonics. The first differentiated signal output from the first differentiator 100 is fed to the second differentiator 110 to output the second differentiated signal as shown in Figure 12D. Only a luminance signal having a low level difference of the second differentiated signal is boosted up in the low level transition booster 120.

The boost up examples of the second differentiated signal are illustrated in Figures 16A through 16D, and Figures 17A and 17B.

The second differentiated signal is applied to the comparator 122 via the absolute value circuit 120 in the low level transition booster 120 as shown in Figure 15. The comparator 122 compares the absolute value signal of the second differentiated signal to a predetermined second reference signal ref2. Then, when the absolute value is larger than the second reference signal ref2 as shown in Figure 16C, switch 124 is coupled as shown in Figure 15 to output the second differentiated signal as it is shown in Figure 16D. When the absolute value of the second differentiated signal is smaller than the second reference signal ref2 as shown in Figure 16A, the switch 124 is coupled to an input terminal 1 so that the second differentiated signal is amplified in the amplifier 123 and output as shown in Figure 16B. In other words, if a luminance signal having a low level difference is input as shown in Figure 17A, the luminance signal is amplified at a certain rate to emphasize an edge compensation component, and if a luminance signal having a high level difference is input as shown in Figure 17B, an original edge compensation signal is sustained as it is.

The reason for differing the amplification rate of the edge compensation signal in accordance with the size of level difference of the luminance signal is to boost up the edge compensation signal only in the case of a luminance signal having a low level difference because the human eyes can perceive a high level difference of a luminance signal but not a low level difference.

As described above, the low level transition booster 120 compares the absolute value signal of the second differentiated signal to the second reference signal ref2, and as a result, it boosts up the second differentiated signal at a certain amplification rate if it is smaller than the second reference signal ref2, and has the absolute value signal of the second differentiated signal pass by if it is larger than the second reference signal ref2.

The code generator 130 compares the boosted second differentiated signal to 2N reference signals generated from the reference signal generator 140 to output an M-bit code. N is an integer and M satisfies the equation, M ≥ 3.3 log (2N+1). With the first reference signal ref1, the reference signal generator 140 generates N positive reference signals and N negative reference signals and a step of the reference signals is 1/N. Thus, the input/output data of the multiplication selector of the horizontal edge compensation circuit are represented in Table 1 below. That is, as shown in Table 1, the 2N reference signals and boosted second differentiated signals are compared to generate the M-bit code as represented in Table 1 in the code generator 130. A signal output from the multiplication selector 170 is selected by the M-bit code. Figure 18 represents an example where N is 2. If N is 2, four reference signals are supplied and the four reference signals are compared to the boosted second differentiated signal so as to generate a 3-bit code. The multiplication selector 170 multiplies the reshaped first differentiated signal by a multiplication ratio of the predetermined multiplication rates selected by the 3-bit code. The multiplication rate is 1/N x m (m is an integer and N ≥ m ≥ - N). The multiplication selector 170 of Figure 20 selects one of the amplifiers coupled in parallel to the output terminal of the waveform reshaper 160 by the code output from the code generator 130, and outputs the signal after amplifying the output signal of the waveform reshaper at a predetermined amplification rate, and accordingly the multiplication selector 170 outputs a signal as shown in Figure 12E having a waveform of a signal resulted from multiplying the signal of Figure 12C by the signal shown in Figure 12D. As shown in Figure 19 and the Table 1, reference signals each having a size of 1/N x m corresponding to the first reference signal refl are output from the reference signal generator 140, and signals each having a size of 1/N x m x A are output from the multiplication selector 170, when A is defined as the size of the reshaped first differentiated signal.

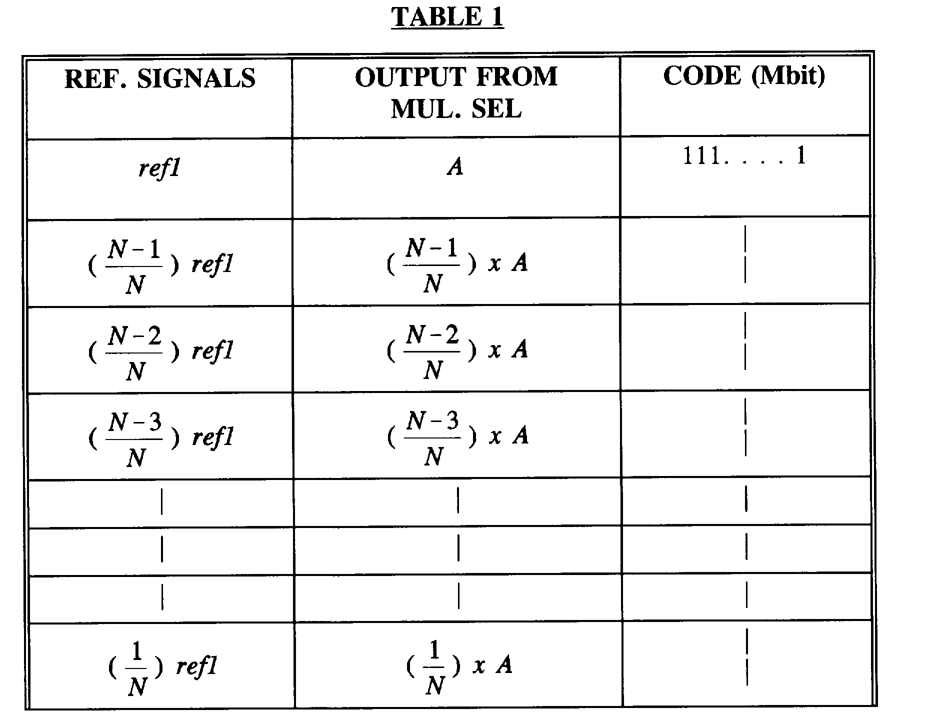

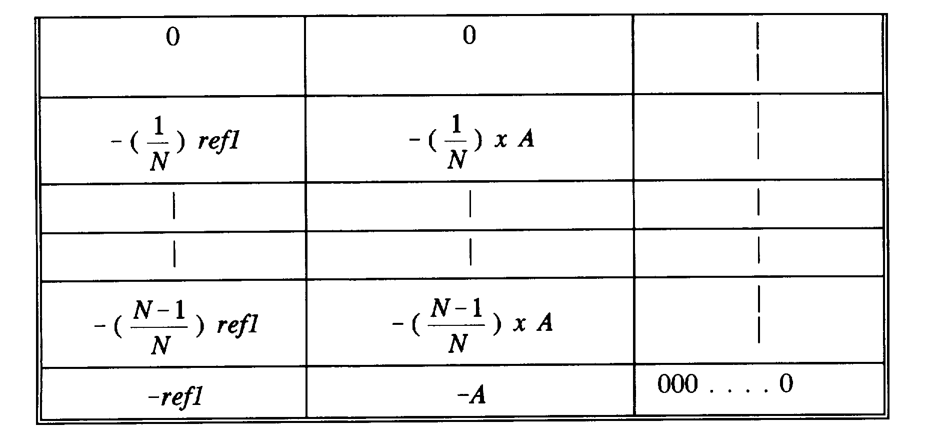

The gain of the output signal of the multiplication selector 170 as shown in Figure 12E is controlled by a gain control signal in the multiplier 180. Receiving the gain-controlled output signal, the adder 200 adds the luminance signal delayed for a certain time in the delay circuit 190 to the output signal of the multiplier 180 to output a horizontal edge-compensated luminance signal Y'. The horizontal edge-compensated signals are the same as those of Figures 21A and 21B. In Figure 21A, roll-off of the signal is controlled according to the value of N as expressed by dotted lines a and b, and in Figure 21B the emphasis degree of the horizontal edge compensation signal is controlled by gain control. That is, in Figure 21B, dotted line d represents gain "0" and dotted line c represents the maximum gain. The final horizontal edge-compensated signal as shown in Figure 12F is obtained by performing the entire process starting from the input luminance signal Y in a certain interval, whereby transition time of a video signal is reduced to improve resolution of a picture.

As described above, the horizontal edge compensation circuit differentiates an input luminance signal Y whose level varies to take the absolute value, reshapes the waveform, and then differentiates the first differentiated signal again. If the level of the second differentiated signal is lower than a certain level, the second differentiated signal is boosted up at a certain amplification rate and if the level of the signal is higher than a certain level, the second differentiated signal is bypassed so that the signal is compared to certain signals to generate a code having certain bits.

After that, the waveform reshaped signal is multiplied by a multiplication value selected according to the code to get a horizontal edge compensation signal. Then the gain of the horizontal edge compensation signal is controlled, and the horizontal edge compensation signal is added to the input luminance signal Y delayed for a certain time to obtain a horizontal edge-compensated signal. By doing that, above-described embodiments of the present invention improve resolution without changing standard bandwidth in the system.

While preferred embodiments of the invention have been particularly shown and described, it will be understood by those skilled in the art that various changes in form and details may be made therein without departing from the scope of the invention as defined by the appended claims.

## Claims

1. A horizontal edge compensation circuit comprising means (190) for delaying an input luminance signal, waveform converter means (300) comprising a first differentiator (100) for differentiating said input luminance signal to output a first differentiated signal, absolute value means (150) for taking the absolute value of the first differentiated signal and waveform reshaping means (160) for reshaping the signal output from the absolute value means (150) to produce a converted signal; and means (200) for adding to the delayed luminance signal a proportion of said first differentiated signal, which proportion is a function of a second differentiated signal, characterised in that the circuit further comprises quantization means comprising a second differentiator circuit (110) for differentiating again the first differentiated signal to produce the second differentiated signal, means for comparing the second differentiated signal with a predetermined reference level, amplifying the second differentiated signal only if it has a low level difference and not amplifying it if it has a high level difference, and then, generating a code signal to quantize the second differentiated signal (400), the reshaping means comprising means for generating first (D10), second (D11) and third (D12) data signals from the absolute value of said first differentiated signal and from delayed versions thereof thereby to detect the falling edge or the rising edge of the absolute value signal of said first differentiated signal and to select sampling data comprising one of said first, second or third data signals according to whether the edge is rising or falling, to output said converted signal to a gain control means (500) for selectively multiplying said converted signal according to said code signal, and thereby controlling the degree of a horizontal edge compensation signal output from the gain control means (500), and said adder (200) adds the input luminance signal delayed for a certain time in said delay means (190) to said horizontal edge compensation signal.

2. A horizontal edge compensation circuit as claimed in claim 1, in which said quantization means (400) comprises:
a low level transition booster (120) for amplifying and outputting the second differentiated signal supplied from said second differentiation circuit (110) at a predetermined amplification rate if the second differentiated signal is lower than a second reference signal;
a reference signal generator (140) for receiving a first reference signal and generating therefrom a plurality of reference signals having a certain step therebetween; and
a code generator (130) for comparing the output signal of said low level transition booster (120) with the reference signals output from said reference signal generator (140) to generate a certain-bit code signal.

3. A horizontal edge compensation circuit as claimed in claim 1 or 2, in which said gain control means (500) comprises:
a multiplication selector (170) for multiplying the signal output from said waveform reshaper (160) by a multiplication value selected according to said code signal and outputting the obtained signal; and
a multiplier (180) for receiving a gain control signal and controlling the gain of the output signal of said multiplication selector (170).

4. A horizontal edge compensation circuit as claimed in claim 1, or claim 1 together with claim 2 or 3, in which said waveform reshaper (160) comprises:
first and second delay circuits (161, 162) for delaying for a certain time and outputting a signal whose absolute value is taken in said absolute value circuit (150) after differentiating the input luminance signal;
comparing means (168) for comparing to one another the output signals of said first and second delay circuits (161, 162) and said absolute value circuit (150);
logic means (169) for outputting a selection signal, being coupled to the output terminal of said comparing means (168); and
a multiplexer (167) for selecting and outputting a signal among the signals output from said first and second delay circuits (161, 162) an absolute value circuit (150) according to the selection signal supplied from said logic means (169).

5. A horizontal edge compensation circuit as claimed in claim 1, or claim 1 together with claim 2 or 3, in which said waveform converter means (300) comprises:
first to fourth delay circuits (211, 212, 213, 214) for sequentially delaying the input luminance signal for a certain time;
operation means (240) having first to third adders (215, 216, 217) and first to third absolute value circuits (218, 219, 220) to generate first to third data signals (D10, D11, D12), by calculating said input luminance signal and the signals output from said first to fourth delay circuits (211, 212, 213, 214), then taking absolute values of the calculated results;
comparing means (250) having first and third comparators (221, 223) for receiving said second and third data signals (D11, D12) and comparing their respective sizes, and second and fourth comparators (222, 224) for receiving said first and second data signals (D10, D11) and comparing their respective sizes;
logic means (260) having a first AND gate (225) for receiving the output signals from said first and second comparators (221, 222) and outputting a selection signal, and a second AND gate (226) for receiving the output signals from said third and fourth comparators (223, 224) and outputting another selection signal; and
a multiplexer (230) for selecting and outputting a signal among the signals output from said first through third absolute value circuits (218, 219, 220) according to the selection signals from said logic means (260).

6. A horizontal edge compensation circuit as claimed in claim 2, or claim 2 together with claim 3, 4 or 5, in which said low level transition booster (120) comprises:
an absolute value circuit (121) for taking an absolute value of the second differentiated signal supplied from said second differentiator (110);
a comparator (122) for comparing the absolute value signal of the second differentiated signal from the absolute value circuit (121) with a predetermined reference signal;
an amplifier (123) for amplifying said second differentiated signal; and
a switch device (124) for selecting and outputting the output signal of said amplifier (123) or the second differentiated signal without amplification, according to the output signal of said comparator (122).

7. A horizontal edge compensation circuit as claimed in claim 2, or claim 2 together with any of claims 3 to 6, in which said code generator (130) outputs M-bit codes satisfying M ≥ 3.3 log(2N + 1) by comparing the signal supplied from said low level transition booster (120) with 2N reference signals supplied from said reference signal generator (140), where M is defined as the bit number of the code generated from said code generator (130) and N is an integer.

8. A horizontal edge compensation circuit as claimed in claim 3, or claim 3 together with any of claims 4 to 7, in which said multiplication selector (170) converts a signal supplied from said waveform converter means (300) into a signal of A x 1/N x m according to the code signal supplied from said code generator (130) and outputs the result, where A is defined as the size of the output signal of said waveform converter means (300) and multiplied as 1/N x m (m is an integer and satisfies N ≥ m ≥ -N).

9. Video apparatus characterised in that it is provided with a horizontal edge compensation circuit according to any of the preceding claims.

## Patentansprüche

1. Horizontal-Kanten-Kompensations-Schaltkreis, der eine Einrichtung (190) zum Verzögern eines Luminanz-Eingangs-Signals, eine Wellenform-Wandlereinrichtung (300), die einen ersten Differenzierer (100) zum Differenzieren des Eingangs-Luminanz-Signals aufweist, um ein erstes, differenziertes Signal auszugeben, eine Absolutwert-Einrichtung (150) zum Aufnehmen des Absolutwerts des ersten, differenzierten Signals und eine Wellenform-Rückformungseinrichtung (160) zum Zurückformen des Signalausgangs von der Absolutwert-Einrichtung (150), um ein konvertiertes Signal zu produzieren; und eine Einrichtung (200) zum Addieren zu dem verzögerten Luminanz-Signal eines Anteils des ersten, differenzierten Signals, wobei der Anteil eine Funktion eines zweiten, differenzierten Signals ist, aufweist, dadurch gekennzeichnet, daß der Schaltkreis weiterhin eine Quantisierungseinrichtung, die einen zweiten Differenzierer-Schaltkreis (110) zum Differenzieren erneut des ersten, differenzierten Signals aufweist, um das zweite, differenzierte Signal zu produzieren, eine Einrichtung zum Vergleichen des zweiten, differenzierten Signals mit einem vorbestimmten Referenzpegel, Verstärkung des zweiten, differenzierten Signals nur dann, wenn es eine niedrige Pegeldifferenz besitzt, und nicht Verstärkung von diesem, wenn es eine Ruhepegeldifferenz besitzt, und dann Erzeugen eines Codesignals, um das zweite, differenzierte Signal (400) zu quantisieren, aufweist, wobei die Rückformungs-Einrichtung eine Einrichtung zum Erzeugen eines ersten (D10), eines zweiten (D11) und eines dritten (D12) Datensignals von dem absoluten Wert des ersten, differenzierten Signals und von verzögerten Versionen davon aufweist, um dadurch die abfallende Flanke oder die ansteigende Flanke des Absolutwert-Signals des ersten, differenzierten Signals zu erfassen und um Abtastdaten auszuwählen, die eines des ersten, des zweiten oder des dritten Daten-Signals aufweisen, entsprechend dazu, ob die Kante ansteigend oder abfallend ist, um das konvertierte Signal zu einer Verstärkungs-Steuereinrichtung (500) zum selektiven Vervielfachen des konvertierten Signals gemäß dem Code-Signal auszugeben und um dadurch den Grad eines Horizontal-Kanten-Kompensations-Signal-Ausgangs von der Steuereinrichtung (500) zu steuern, und daß der Addierer (200) das Eingangs-Luminanz-Signal, das für eine bestimmte Zeit in der Verzögerungseinrichtung (190) verzögert ist, zu dem Horizontal-Kanten-Kompensations-Signal hinzuaddiert.

2. Horizontal-Kanten-Kompensations-Schaltkreis nach Anspruch 1, in dem die Quantisierungseinrichtung (400) aufweist:
einen Niedrigpegel-Übergangs-Booster (120) zum Verstärken und Ausgeben des zweiten, differenzierten Signals, das von dem zweiten Differenzier-Schaltkreis (110) zugeführt ist, unter einer vorbestimten Verstärkungsrate, wenn das zweite, differenzierte Signal niedriger als ein zweites Referenz-Signal ist;
einen Referenz-Signal-Generator (140) zum Aufnehmen eines ersten Referenz-Signals und zum Erzeugen daraus einer Vielzahl Referenz-Signale, die eine bestimmte Abstufung dazwischen besitzen; und
einen Code-Generator (130) zum Vergleichen des Ausgangs-Signals des Niedrig-Pegel-Übergangs-Boosters (120) mit den Referenz-Signalen, die von dem Referenz-Signal-Generator (140) ausgegeben sind, um ein Code-Signal mit einem bestimmten Bit zu erzeugen.

3. Horizontal-Kanten-Kompensations-Schaltkreis nach Anspruch 1 oder 2, wobei die Verstärkungs-Steuereinrichtung (500) aufweist:
einen Multiplikationsselektor (170) zum Multiplizieren des Signalausgangs von dem Wellenform-Rückformer (160) mit einem Multiplikationswert, der gemäß dem Code-Signal ausgewählt ist, und Ausgeben des erhaltenen Signals; und
einen Multiplier (180) zum Aufnehmen eines Verstärkungs-Steuer-Signals und zum Steuern der Verstärkung des Ausgangs-Signals von dem Multiplikationsselektor (170).

4. Horizontal-Kanten-Kompenasations-Schaltkreis nach Anspruch 1, oder nach Anspruch 1 zusammen mit Anspruch 2 oder 3, wobei der Wellenform-Rückformer (160) aufweist:
einen ersten und einen zweiten Verzögerungs-Schaltkreis (161, 162) zum Verzögern für eine bestimmte Zeit und Ausgeben eines Signals, dessen absoluter Wert in den Absolutwert-Schaltkreis (150) nach Differenzieren des Eingangs-Luminanz-Signals hineingenommen wird;
eine Vergleichseinrichtung (168) zum Vergleichen miteinander der Ausgangs-Signale des ersten und des zweiten Verzögerungs-Schaltkreises (161, 162) und des Absolutwert-Schaltkreises (150);
eine Logikeinrichtung (169) zum Ausgeben eines Auswahl-Signals, die mit dem Ausgangsanschluß der Vergleichseinrichtung (168) gekoppelt ist; und
einen Multiplexer (167) zum Auswählen und Ausgeben eines Signals unter den Signalen, die von dem ersten und dem zweiten Verzögerungs-Schaltkreis (161, 162) und dem Absolutwert-Schaltkreis (150) ausgegeben sind, gemäß dem Auswahl-Signal, das von der Logikeinrichtung (169) zugeführt ist.

5. Horizontal-Kanten-Kompensations-Schaltkreis nach Anspruch 1, oder nach Anspruch 1 zusammen mit Anspruch 2 oder 3, wobei die Wellenform-Wandlereinrichtung (300) aufweist:
erste bis vierte Verzögerungs-Schaltkreise (211, 212, 213, 214) zum sequenziellen Verzögern des Eingangs-Luminanz-Signals für eine bestimmte Zeit;
eine Betriebseinrichtung (240), die erste bis dritte Addierer (215, 216, 217) und erste bis dritte Absolutwert-Schaltkreise (218, 219, 220) besitzt, um erste bis dritte Datensignale (D10, D11, D12) durch Berechnen des Eingangs-Luminanz-Signals und der Signale, die von dem ersten bis vierten Verzögerungs-Schaltkreis (211, 212, 213, 214) ausgegeben sind, zu erzeugen, wobei dann die absoluten Werte der berechneten Ergebnisse genommen werden;
eine Vergleichseinrichtung (250), die einen ersten und einen dritten Komparator (221, 223) zum Aufnehmen des zweiten und des dritten Datensignals (D11, D12) und zum Vergleichen deren jeweiliger Größen und einen zweiten und einen vierten Komparator (222, 224) zum Aufnehmen des ersten und des zweiten Datensignals (D10, D11) und zum Vergleichen deren jeweiliger Größen besitzt;
eine Logikeinrichtung (260), die ein erstes UND-Gatter (225) zum Aufnehmen der Ausgangs-Signale von dem ersten und dem zweiten Komparator (221, 222) und zum Ausgeben eines Auswahl-Signals, und ein zweites UND-Gatter (226) zum Aufnehmen der Ausgangs-Signale von dem dritten und dem vierten Komparator (223, 224) und zum Ausgeben eines anderen Auswahl-Signals besitzt; und
einen Multiplxer (230) zum Auswählen und Ausgeben eines Signals unter den Signalen, die von dem ersten bis dritten Absolutwert-Schaltkreis (218, 219, 220), gemäß den Auswahl-Signalen von der Logikeinrichtung (260), ausgegeben sind.

6. Horizontal-Kanten-Kompensations-Schaltkreis nach Anspruch 2, oder nach Anspruch 2 zusammen mit Anspruch 3, 4 oder 5, wobei der Niedrig-Pegel-Übergangs-Booster (120) aufweist:
einen Absolutwert-Schaltkreis (121) zum Aufnehmen eines Absolutwerts des zweiten, differenzierten Signals, das von dem zweiten Differenzierer (110) zugeführt ist;
einen Komparator (122) zum Vergleich des Absolutwert-Signals des zweiten, differenzierten Signals von dem Absolutwert-Schaltkreis (121) mit einem vorbestimmten Referenz-Signal;
einen Verstärker (123) zum Verstärken des zweiten, differenzierten Signals; und
eine Schaltvorrichtung (124) zum Auswählen und Ausgeben des Ausgangs-Signals des Verstärkers (123) oder des zweiten, differenzierten Signals ohne Verstärkung, gemäß dem Ausgangs-Signal des Komparators (122).

7. Horizontal-Kanten-Kompensations-Schaltkreis nach Anspruch 2, oder nach Anspruch 2 zusammen mit irgendeinem der Ansprüche 3 bis 6, wobei der Code-Generator (130) M-Bit-Code, die M ≥ 3,3 log (2N + 1) genügen, durch Vergleich des Signals, das von dem Niedrig-Pegel-Übergangs-Booster (120) zugeführt ist, mit 2N Referenz-Signalen, die von dem Referenz-Signalgenerator (140) zugeführt sind, ausgibt, wobei M als die Bit-Nummer des Codes definiert ist, der von dem Code-Generator (130) erzeugt ist, und wobei N eine ganze Zahl ist.

8. Horizontal-Kanten-Kompensations-Schaltkreis nach Anspruch 3, oder nach Anspruch 3 zusammen mit irgendeinem der Ansprüche 4 bis 7, wobei der Multiplikationsselektor (170) ein Signal, das von der Wellenform-Wandlereinrichtung (300) zugeführt ist, in ein Signal von A x 1/N x m gemäß dem Code-Signal, das von dem Code-Generator (130) zugeführt ist, umwandelt und das Ergebnis ausgibt, wobei A als die Größe des Ausgangs-Signals der Wellenform-Wandlereinrichtung (300) definiert ist und mit 1/N x m multipliziert ist (m ist eine ganze Zahl und erfüllt N ≥ m ≥ -N).

9. Video-Gerät, dadurch gekennzeichnet, daß es mit einem Horizontal-Kanten-Kompensations-Schaltkreis nach einem der vorhergehenden Ansprüche versehen ist.

## Revendications

1. Circuit de compensation de bord horizontal comprenant des moyens (190) pour retarder un signal de luminance d'entrée, des moyens de conversion de forme d'onde (300) comprenant un premier différentiateur (100) pour différentier ledit signal de luminance d'entrée afin de délivrer un premier signal différentié, des moyens de détection de valeur absolue (150) pour prendre la valeur absolue du premier signal différentié et des moyens de remise en forme de forme d'onde (160) pour remettre en forme le signal délivré par les moyens de détection de valeur absolue (150) afin de produire un signal converti; et des moyens (200) pour ajouter au signal de luminance retardé un pourcentage dudit premier signal différentié, ledit pourcentage étant une fonction d'un second signal différentié, caractérisé en ce que le circuit comprend également des moyens de quantification comprenant un second circuit différentiateur (110) pour différentier de nouveau le premier signal différentié afin de produire le second signal différentié, des moyens pour comparer le second signal différentié à un niveau de référence prédéterminé, amplifier le second signal différentié seulement s'il comporte une différence de faible niveau et ne pas l'amplifier s'il comporte une différence de niveau élevé, et générer ensuite un signal de code pour quantifier le second signal différentié (400), les moyens de remise en forme comprenant des moyens pour générer des premier (D10), second (D11) et troisième (D12) signaux de données à partir de la valeur absolue dudit premier signal différentié et à partir des versions retardées de celui-ci afin de détecter ainsi le front descendant ou le front montant du signal de valeur absolue dudit premier signal différentié et sélectionner des données d'échantillonnage comprenant l'un desdits premier, second ou troisième signal de données selon que le front est un front montant ou un front descendant, afin de délivrer ledit signal converti à des moyens de commande de gain (500) pour multiplier de manière sélective ledit signal converti en fonction dudit signal de code, et de commander grâce à cela le niveau d'un signal de compensation de bord horizontal délivré par les moyens de commande de gain (500), et ledit additionneur (200) ajoute le signal de luminance d'entrée retardé d'une durée déterminée dans lesdits moyens de retard (190) audit signal de compensation de bord horizontal.

2. Circuit de compensation de bord horizontal selon la revendication 1, dans lequel lesdits moyens de quantification (400) comprennent:
un préamplificateur de transition de faible niveau (120) pour amplifier et délivrer le second signal différentié, fourni par ledit second circuit de différentiation (110), avec un gain d'amplification prédéterminé si le second signal différentié est inférieur à un second signal de référence;
un générateur de signaux de référence (140) pour recevoir un premier signal de référence et générer à partir de celui-ci une pluralité de signaux de référence ayant un pas déterminé entre eux; et
un générateur de code (130) pour comparer le signal de sortie dudit préamplificateur de transition de faible niveau (120) aux signaux de référence délivrés par ledit générateur de signaux de référence (140) afin de générer un signal de code avec des bits déterminés.

3. Circuit de compensation de bord horizontal selon la revendication 1 ou 2, dans lequel lesdits moyens de commande de gain (500) comprennent:
un sélecteur de multiplication (170) pour multiplier le signal délivré par ledit circuit de mise en forme de forme d'onde (160) par une valeur de multiplication sélectionnée en fonction dudit signal de code et délivrer le signal obtenu; et
un multiplieur (180) pour recevoir un signal de commande de gain et commander le gain du signal de sortie dudit sélecteur de multiplication (170).

4. Circuit de compensation de bord horizontal selon la revendication 1, ou selon la revendication 1 et la revendication 2 ou 3, dans lequel ledit circuit de mise en forme de forme d'onde (160) comprend:
des premier et second circuits de retard (161, 162) pour retarder d'une durée déterminée et délivrer un signal dont la valeur absolue est prise dans ledit circuit de détection de valeur absolue (150) après différentiation du signal de luminance d'entrée;
des moyens de comparaison (168) pour comparer l'un à l'autre les signaux de sortie desdits premier et second circuits de retard (161, 162) et dudit circuit de détection de valeur absolue (150);
des moyens logiques (169) pour délivrer un signal de sélection, ceux-ci étant couplés à la borne de sortie desdits moyens de comparaison (168); et
un multiplexeur (167) pour sélectionner et délivrer un signal parmi les signaux délivrés par lesdits premier et second circuits de retard (161, 162) et ledit circuit de détection de valeur absolue (150) en fonction du signal de sélection fourni par lesdits moyens logiques (169).

5. Circuit de compensation de bord horizontal selon la revendication 1, ou selon la revendication 1 et la revendication 2 ou 3, dans lequel lesdits moyens de conversion de forme d'onde (300) comprennent:
quatre circuits de retard, d'un premier circuit à un quatrième circuit (211, 212, 213, 214), pour retarder successivement le signal de luminance d'entrée d'une durée déterminée;
des moyens de calcul (240) ayant trois additionneurs, d'un premier additionneur à un troisième additionneur (215, 216, 217), et trois circuits de détection de valeur absolue, d'un premier circuit à un troisième circuit (218, 219, 220), pour générer trois signaux de données, d'un premier signal à un troisième signal (D10, D11, D12), en traitant par calcul ledit signal de luminance d'entrée et les signaux délivrés par lesdits premier à quatrième circuits de retard (211, 212, 213, 214), et en prenant ensuite les valeurs absolues des résultats calculés;
des moyens de comparaison (250) ayant des premier et troisième comparateurs (221, 223) pour recevoir lesdits second et troisième signaux de données (D11, D12) et comparer leurs amplitudes respectives, et des second et quatrième comparateurs (222, 224) pour recevoir lesdits premier et second signaux de données (D10, D11) et comparer leurs amplitudes respectives;
des moyens logiques (260) ayant une première porte ET (225) pour recevoir les signaux de sortie provenant desdits premier et second comparateurs (221, 222) et délivrer un signal de sélection, et une seconde porte ET (226) pour recevoir les signaux de sortie provenant desdits troisième et quatrième comparateurs (223, 224) et délivrer un autre signal de sélection; et
un multiplexeur (230) pour sélectionner et délivrer un signal parmi les signaux délivrés par lesdits premier à troisième circuits de détection de valeur absolue (218, 219, 220) en fonction des signaux de sélection provenant desdits moyens logiques (260).

6. Circuit de compensation de bord horizontal selon la revendication 2, ou selon la revendication 2 et la revendication 3, 4 ou 5, dans lequel ledit préamplificateur de transition de faible niveau (120) comprend:
un circuit de détection de valeur absolue (121) pour prendre la valeur absolue du second signal différentié fourni par ledit second différentiateur (110);
un comparateur (122) pour comparer le signal de valeur absolue du second signal différentié provenant du circuit de détection de valeur absolue (121) à un signal de référence prédéterminé;
un amplificateur (123) pour amplifier ledit second signal différentié; et
un commutateur (124) pour sélectionner et délivrer le signal de sortie dudit amplificateur (123) ou le second signal différentié sans amplification, en fonction du signal de sortie dudit comparateur (122).

7. Circuit de compensation de bord horizontal selon la revendication 2, ou selon la revendication 2 et l'une quelconque des revendications 3 à 6, dans lequel ledit générateur de code (130) délivre des codes de M bits satisfaisant la relation M ≥ 3,3log(2N+1) en comparant le signal fourni par ledit préamplificateur de transition de faible niveau (120) à 2N signaux de référence fournis par ledit générateur de signaux de référence (140), où M représente le nombre de bits du code généré par ledit générateur de code (130) et N est un entier.

8. Circuit de compensation de bord horizontal selon la revendication 3, ou selon la revendication 3 et l'une quelconque des revendications 4 à 7, dans lequel ledit sélecteur de multiplication (170) convertit un signal fourni par lesdits moyens de conversion de forme d'onde (300) en un signal A x 1/N x m en fonction du signal de code fourni par ledit générateur de code (130) et délivre le résultat, où A représente l'amplitude du signal de sortie desdits moyens de conversion de forme d'onde (300) et est multiplié par 1/N x m (m étant un entier et satisfaisant la relation N ≥ m ≥ -N).

9. Appareil vidéo caractérisé en ce qu'il est équipé d'un circuit de compensation de bord horizontal selon l'une quelconque des revendications précédentes.
